# EUROPÄISCHE PATENTSCHRIFT

(11) **EP 1 897 196 B1**
(45) Veröffentlichungstag und Bekanntmachung des Hinweises auf die Patenterteilung: **29.07.2009**
(21) Anmeldenummer: 06763429.5
(22) Anmeldetag: 31.05.2006
(51) Int. Cl.: H02G 3/06

(54) **ANORDNUNG ZUM ERSTELLEN EINER VERBINDUNG ZWISCHEN ZWEI KABELTRAGVORRICHTUNGSELEMENTEN SOWIE VERBINDUNGSELEMENT**
ARRANGEMENT FOR ESTABLISHING A CONNECTION BETWEEN TWO CABLE SUPPORT DEVICE ELEMENTS AND CONNECTION ELEMENTS
SYSTEME POUR ETABLIR UNE LIAISON ENTRE DEUX ELEMENTS DE DISPOSITIF DE SUSPENSION DE CABLE ET ELEMENTS DE LIAISON

(30) Priorität: 28.06.2005 DE 202005010108 U
(43) Veröffentlichungstag der Anmeldung: 12.03.2008
(73) Patentinhaber: OBO Bettermann GmbH & Co. KG, 58710 Menden (DE)
(72) Erfinder: JORDAN, Ernst-Günther, 58710 Menden (DE)
(74) Vertreter: Haverkamp, Jens
(86) Internationale Anmeldenummer: PCT/EP2006/062801
(87) Internationale Veröffentlichungsnummer: WO 2007/000384

(56) Entgegenhaltungen:
- EP-A- 0 645 862
- WO-A-92/04755
- DE-U1- 20 205 094
- FR-A- 2 408 748

## Beschreibung

Die Erfindung betrifft eine Anordnung zum Erstellen einer Verbindung zwischen zwei im Bereich eines Verbindungsabschnittes überlappend angeordneten Kabeltragvorrichtungselementen zur Ausbildung eines Kabeltragsystems unter Verwendung zumindest eines die beiden Kabeltragvorrichtungselemente zusammenhaltenden Verbindungselementes, wobei das Verbindungselement einen Andruckabschnitt und zwei an unterschiedlichen Seiten bezüglich des Andruckabschnittes angeordnete Verriegelungsarme mit jeweils einen in einer Querrichtung zur Erstreckung des Andruckabschnittes verlaufenden Verbindungsschenkel und mit einem an dem freien Ende des Verbindungsschenkels angeordneten Hakenelement aufweist und sich das zum Zusammenhalten der beiden Kabeltragvorrichtungselemente montierte Verbindungselement unter Federvorspannung stehend mit seinem Andruckabschnitt auf der Oberfläche des Verbindungsabschnittes des einen Kabeltragvorrichtungselements und mit seinen den Verbindungsabschnitt des anderen Kabeltragvorrichtungselements hintergreifenden Hakenelementen auf der gegenüberliegenden Oberfläche des Verbindungsabschnittes des anderen Kabeltragvorrichtungselements abstützt. Ferner betrifft die Erfindung ein Verbindungselement gemäß dem Oberbegriff des Anspruchs 4.

Bei derartigen Kabeltragvorrichtungselementen handelt es sich um Kabelrinnen, Kabelkanäle, Kabelleiter oder dergleichen, von denen mehrere einzelne derartiger Elemente zu einem Kabeltrag- bzw. Kabelführungssystem zusammengesetzt werden. Kabeltragvorrichtungselemente, mit denen ein Kabeltragsystem durch Zusammensetzen mehrerer derartiger Elemente werkzeug- und schraubenlos erfolgt, ist aus DE 198 41 643 A1 bekannt. Diese vorbekannten Kabeltragvorrichtungselemente weisen an beiden Enden einen Verbindungsabschnitt mit jeweils komplementären mechanischen Verbindungsgliedern auf. Der Verbindungsabschnitt dieser vorbekannten Kabeltragvorrichtungselemente ist durch eine den Innenraum geringfügig vergrößernde Verkröpfung der Seitenholme sowie der Bodeneinheit ausgebildet, während der andere Verbindungsabschnitt unverkröpft ist. Als mechanische Verbindungsglieder dienen Rast- und Riegelausnehmungen einerseits und als komplementäre Glieder Rasten und Riegel andererseits. Dieses vorbekannte Kabeltragvorrichtungselement besteht aus Blech, so dass die Rast- und Riegelausnehmungen Ausstanzungen und die Rast- und Riegelausprägungen, umgeformte Ausklingungen, Laschen oder dergleichen sind.

Zwar lassen sich mit den vorbeschriebenen Mitteln einzelne Kabeltragvorrichtungselemente werkzeuglos miteinander verbinden, jedoch erfordert die Ausbildung der notwendigen Verbindungsglieder, wie Ausprägungen, Ausklinkungen und dergleichen einen nicht unbeträchtlichen werkzeugtechnischen Aufwand. Zum bestimmungsgemäßen Verbinden zweier Kabeltragvorrichtungselemente wird zudem eine gewisse Materialelastizität vorausgesetzt. Nicht jedes Kabeltragvorrichtungselement weist jedoch eine solche Eigenschaft in ausreichendem Maße auf.

Zum Verbinden von zwei Kabeltragvorrichtungselementen miteinander werden ebenfalls Schrauben als Verbindungselemente eingesetzt. Bei einer solchen Konzeption brauchen die miteinander zu verbindenden Kabeltragvorrichtungselemente mit Ausnahme der notwendigen Durchbrechungen zum Einsetzen der Schrauben grundsätzlich keine weiteren miteinander in Eingriff zu stellende Verbindungsglieder aufweisen, so dass derartige Kabeltragvorrichtungselemente weniger aufwendig herzustellen sind. Jedoch kann die Verbindung zweier Kabeltragvorrichtungselemente nicht werkzeuglos vorgenommen werden.

In erster Linie dienen Kabeltragsysteme zum Tragen von Kabeln. Ein beispielsweise in einem Gebäude installiertes Kabeltragsystems muss vielfach auch weiteren Anforderungen genügen, die über die reine Tragfunktion hinausgehen. Die einzelnen Kabeltragvorrichtungselemente eines Kabeltragsystems müssen, insbesondere wenn diese aus Metall bestehen, in einer solchen Art und Weise dauerhaft elektrisch leitend miteinander verbunden sein, dass sich zwischen aneinandergrenzenden Elementen ein Potentialausgleich einstellen kann. Damit eine solche bestimmungsgemäße elektrische Kontaktierung bei vorbekannten Kabeltragvorrichtungselementen gewährleistet ist, werden jeweils zwei aneinandergrenzende Kabeltragvorrichtungselemente mit Schrauben verbunden. Dieses ist zwar grundsätzlich möglich, hat jedoch zum Nachteil, dass dadurch die Sinnhaftigkeit schraubenloser Kabeltragsysteme, wie beispielsweise in DE 198 41 643 A1 offenbart, verloren geht. Zwar grenzen auch bei diesem vorbekannten Stand der Technik zwei miteinander verbundene Kabeltragvorrichtungselemente aus Blech im Bereich der überlappenden Verbindungsabschnitte aneinander, jedoch ist eine elektrische Kontaktierung aufgrund der notwendigen Toleranzen zum Realisieren der Rast- und Riegelverbindungen eher dem Zufall überlassen. Daher werden auch bei diesem vorbekannten Stand der Technik zusätzlich Schrauben eingesetzt, entweder zum zusätzlichen Schraubverbinden der Seitenholme im Bereich der überlappenden Verbindungsabschnitte oder auch durch Einsetzen eines zusätzlichen Bodenverbinders, der mit den beiden aneinandergrenzenden Böden verschraubt wird.

Eine solche zusätzliche Schraubverbindung zweier ansonsten werkzeug- und schraubenlos zu verbindender Kabeltragvorrichtungselemente ist vor allem dann notwendig, wenn das aus mehreren Kabeltragvorrichtungselementen gebildete Kabeltragsystem eine Schutzleiterfunktion zum Ableiten von Kurzschlussströmen zukommen soll. Es ist dann in jedem Falle sicherzustellen, dass aneinandergrenzende Kabeltragvorrichtungselemente mit der notwendigen Kontaktfläche zum Übertragen eines solchen Kurzschlussstromes elektrisch leitend miteinander verbunden sind.

EP 0 645 862 A offenbart eine Anordnung gemäß dem Oberbegriff des Anspruchs 1. In diesem Dokument ist ein Federbefestiger zum Befestigen eines Teils an einer Kabelrinne beschrieben. Das Federelement durchgreift mit jeweils einem Abschnitt die beiden aneinander anzuschließenden Bauteile. Die Federvorspannung zum Zusammenhalten der beiden zumindest bereichsweise aneinander anliegenden Komponenten resultiert aus einem gebogenen Rückenteil. Aufgrund dieser Anordnung ist ein definiert Kontaktbereich zwischen den aneinander liegenden Komponenten nicht gegeben. Darüber hinaus ist bei dem Gegenstand dieses Dokumentes zu berücksichtigen, dass, damit dieses werkzeuglos montiert werden kann, der Federbefestiger eine gewisse Länge aufweisen muss.

Aus FR 2 408 748 A, WO 92/04755 A sowie DE 202 05 094 U1 sind weitere Federbefestiger bekannt geworden, die zum Erstellen einer Verbindung zwischen zwei Kabeltragvorrichtungselementen verwendet werden. Auch die in diesen Dokumenten beschriebenen Anordnungen dienen ebenso wie die in EP 0 645 862 A beschriebene Anordnung ausschließlich zum Erstellen einer mechanischen Verbindung der Kabeltragvorrichtungselemente.

Auch wenn mit den vorbekannten werkzeug- und schraubenlos zu verbindenden Kabeltragvorrichtungselement die zwischen zwei Kabeltragvorrichtungselementen hergestellte Verbindung unter Umständen für die Anforderungen eines Potentialausgleichs ausreichend sein mag, ist bei diesen vorbekannten Elementen von Nachteil, dass zum Erstellen der mitunter notwendigen elektrischen Verbindung zum Ableiten eines Kurzschlusses zweier aneinandergrenzender Kabeltragvorrichtungselemente zusätzliche Montageschritte zum Herstellen der notwendigen elektrischen Verbindung vorgenommen werden müssen, insbesondere solche, bei denen Werkzeuge benötigt werden, wie etwa beim Spannen von Schrauben.

Ausgehend von diesem diskutierten Stand der Technik liegt der Erfindung die Aufgabe zugrunde, eine Anordnung bereitzustellen, mit der eine werkzeuglose Verbindung von zwei Kabeltragvorrichtungselementen möglich ist, ohne dass sich dieses nachteilig auf den Herstellungsprozess zum Herstellen der einzelnen Kabeltragvorrichtungselemente auswirkt und mit der auch eine dauerhafte, den Anforderungen entsprechende elektrische Verbindung zweier Kabeltragvorrichtungselemente möglich ist.

Diese Aufgabe wird erfindungsgemäß durch eine eingangs genannte Anordnung mit den Merkmalen des kennzeichnenden Teils des Anspruchs 1 gelöst.

Ferner wird diese Aufgabe durch ein Verbindungselement der eingangs genannten Art mit den Merkmalen des kennzeichnenden Teils des Anspruchs 4 gelöst.

Bei dieser Anordnung brauchen die miteinander zu verbindenden Kabeltragvorrichtungselemente, die beispielsweise als Kabelrinnen, Kabelkanäle, Kabelleitern oder dergleichen ausgebildet sein können, unabhängig von ihrer jeweiligen Materialbeschaffenheit lediglich jeweils einen mit einem Verbindungsabschnitt des anderen Kabeltragvorrichtungselementes überlappenden Verbindungsabschnitt. Beide Verbindungsabschnitte brauchen grundsätzlich lediglich Durchbrechungen und/oder Einschnitte als randlich offene Durchbrechungen aufzuweisen, um eine definierte Kontaktfläche auszubilden. Die Kontaktflächen der beiden zu verbindenden Kabeltragvorrichtungselemente sind in ihren jeweiligen Verbindungsabschnitten dergestalt angeordnet, dass bei bestimmungsgemäßer Anordnung der beiden zu verbindenden Kabeltragvorrichtungselemente die Kontaktflächen der beiden Verbindungsabschnitte miteinander fluchtend, vorzugsweise auch aneinander anliegend angeordnet sind. Eine solche Ausbildung der Verbindungsabschnitte ist ohne weiteres möglich, insbesondere unabhängig von dem zur Erstellung eines Kabeltragvorrichtungselementes verwendeten Materials und auch unabhängig von seiner Stärke. Die eigentliche mechanische Verbindung zwischen den beiden Kabeltragvorrichtungselementen erfolgt durch Einsatz eines Verbindungselementes, mit dem die beiden benachbart angeordneten Kontaktflächen der überlappend angeordneten Verbindungsabschnitte zueinander fixiert und die Kontaktflächen mit einem definierten Anpressdruck aneinandergedrückt werden. Zur mechanischen Fixierung der beiden Kabeltragvorrichtungselemente zueinander verfügt das Verbindungselement über einen Andruckabschnitt und zwei, an unterschiedlichen Seiten bezüglich des Andruckabschnittes angeordnete Verriegelungsarme. Die Verriegelungsarme durchgreifen mit ihrem Verbindungsschenkel die aneinander anliegenden Verbindungsabschnitte der beiden Kabeltragvorrichtungselemente und stellen gleichsam Riegel dar, womit die beiden Verbindungsabschnitte formschlüssig miteinander verbunden sind. Die Dimensionierung der Verriegelungsarme des Verbindungselemente sowie der Durchbrechungen bzw. Einschnitte der Verbindungsabschnitte der Kabeltragvorrichtungselemente sind zweckmäßigerweise dergestalt aufeinander abgestimmt, dass die Höhe von zwei voneinander beabstandeten Durchbrechungen der Höhe der Verbindungsschenkel des Verbindungselements entspricht bzw. geringfügig größer als die Höhe der Verbindungsschenkel ist, damit diese ohne weiteres durch die Durchbrechungen hindurchgeführt werden können. Hierdurch ist das Verbindungselement an demjenigen Verbindungsabschnitt mit den zueinander beabstandeten Durchbrechungen in Richtung der Höhe der Verbindungsschenkel quasi spielfrei fixiert. Die lichte Weite der Durchbrechungen ist zweckmäßigerweise abgestimmt auf den Abstand der Verbindungsschenkel der Verriegelungsarme in einer Art und Weise, dass das montierte Verbindungselement in Querrichtung zur Höhe der Verbindungsschenkel ebenfalls spielfrei gehalten ist und eine Nachgiebigkeit allenfalls über die Materialelastizität der Verbindungsschenkel gegeben ist.

Die Verriegelungsarme eines Verbindungselementes tragen an ihrem freien Ende ein Hakenelement, das die Durchbrechung eines Verbindungsabschnittes hintergreift. Während auf der einen Oberseite des Verbindungsabschnittes der Andruckabschnitt anliegt, stützt sich auf der gegenüberliegenden Oberseite der Durchbrechung des anderen Verbindungsabschnittes das Verbindungselement mit seinen Hakenelementen ab. Die Konzeption der Verriegelungsarme ist dergestalt vorgesehen, dass sich das montierte Verbindungselement unter einer gewissen Federvorspannung mit seinem Andruckabschnitt auf der einen Oberseite eines Verbindungsabschnittes abstützt. Die Vorspannung resultiert daraus, dass zumindest einer der beiden Verriegelungsarme, zweckmäßigerweise beide federelastische Materialeigenschaften aufweisen. Gemäß einem bevorzugten Ausführungsbeispiel ist das gesamte Verbindungselement aus einem Blech aus Federstahl hergestellt.

Mit einem solchen Verbindungselement können zwei überlappend angeordnete Verbindungsabschnitte zweier Kabeltragvorrichtungselemente miteinander mechanisch auf einfache Weise und werkzeuglos miteinander verbunden werden. Dieses erfolgt gemäß einem Ausführungsbeispiel dadurch, dass beide Verbindungsabschnitte miteinander fluchtende Durchbrechungen zum Begrenzen der jeweiligen Kontaktflächen aufweisen und nach Erstellen der überlappenden Anordnung die Verriegelungsarme des einer Kontaktfläche zugeordneten Verbindungselementes durch die Durchbrechungen hindurchgeführt werden, bis die Hakenelemente sich an der an dem Andruckabschnitt des Verbindungselementes gegenüberliegenden Oberfläche des anderen Verbindungsabschnittes abstützen. Infolge der definierten, durch die Verriegelungsarme aufgebrachten Vorspannung liegen sodann die Kontaktflächen der überlappend angeordneten Verbindungsabschnitte der beiden Kabeltragvorrichtungselemente mit definierter Andruckkraft aneinander, was insbesondere zum Ausbilden einer elektrischen Verbindung der beiden Käbeltragvorrichtungselemente gewünscht ist. Durch das Verbindungselement erfolgt somit nicht nur eine präzise mechanische, sondern insbesondere auch eine definierte elektrische Verbindung zweier Kabeltragvorrichtungselemente miteinander. Die Beabstandung der Durchbrechungen zum Durchführen der Verriegelungsarme definiert unter anderem die Größe der Kontaktfläche, mit dem die beiden Verbindungsabschnitte unter vorgenannten Bedingungen definiert aneinander liegen. Durch Verwendung eines Verbindungselementes, welches zumindest zwei voneinander beabstandete, die jeweilige Kontaktfläche einfassende Verriegelungsarme aufweist, gestattet die Ausbildung des Verbindungselementes in einer Art und Weise, dass die beiden miteinander zu verbindenden Kontaktflächen mit einer flächig wirkenden Andruckkraft aneinander angrenzend gehalten werden können.

Die Verbindungsabschnitte der beiden zu verbindenden Kabeltragvorrichtungselemente befinden sich zweckmäßigerweise in den Seitenwänden. In Abhängigkeit von der Höhe der Seitenwände verfügen diese jeweils über ein oder mehrere Kontaktflächen. Zum Herstellen der gewünschten Verbindung wird eine entsprechende Anzahl an Verbindungselementen eingesetzt.

In einer bevorzugten Ausgestaltung weist jede Kabeltragvorrichtung an ihrem Ende jeweils einen komplementär ausgebildeten Verbindungsabschnitt auf.

Die zur Erstellung einer mechanischen Verbindung mit einem weiteren Kabeltragvorrichtungselement benötigten Verbindungselemente sind zweckmäßigerweise an dem einen Verbindungsabschnitt vormontiert, und zwar an demjenigen Verbindungsabschnitt, dessen Kontaktflächen durch zwei voneinander beabstandeten Durchbrechungen gebildet sind. Zum Verbinden eines solchen Verbindungsabschnittes mit seinen vormontierten Verbindungselementen ist die Kontaktfläche des komplementären Verbindungsabschnittes des anderen Kabeltragvorrichtungselementes zweckmäßigerweise durch Einschnitte als randlich offene Durchbrechungen definiert, so dass eine Steckerzunge als Flachsteckerelement ausgebildet ist. Dieses kann durch zwei voneinander beabstandete Einschnitte oder durch einen Einschnitt und einen Rand des Verbindungsabschnittes gebildet sein. Eine solche Steckerzunge wird zum Erstellen der gewünschten Verbindung unter den Andruckabschnitt des an dem anderen Verbindungsabschnitt montierten Verbindungselementes geschoben. Um diese Montage zu erleichtern, ist es zweckmäßig, wenn die Verbindungselemente eine zu der einzuschiebenden Steckerzunge weisende, nach außen ausgestellte Anlaufschräge aufweisen. Diese befindet sich vorzugsweise an dem freien Ende eines zusätzlichen Verriegelungsfortsatzes an jedem Verbindungselement. Dieser zusätzliche Verriegelungsfortsatz trägt gemäß einer bevorzugten Ausgestaltung einen nach innen ausgestellten Sperrriegel, der in eine Sperrriegelausnehmung des Verbindungsabschnittes eingreift, wenn die beiden Kabeltragvorrichtungselemente bestimmungsgemäß zusammengesetzt sind. Durch den in die Sperrriegelausnehmung eingreifenden Sperrriegel sind beide Kabeltragvorrichtungselemente sodann ebenfalls in Fügerichtung verriegelt. Die Anlaufschräge kann zum Lösen einer solchen Verbindung durch Einschieben eines Werkzeuges, beispielsweise eines Schraubendrehers genutzt werden, mit dem der Sperrriegel aus der Sperrriegelausnehmung herausgehoben werden kann.

Nachfolgend ist die Erfindung anhand eines Ausführungsbeispiels unter Bezugnahme auf die beigefügten Figuren beschrieben. Es zeigen:
- **Fig. 1:**: eine schematisierte Darstellung einer Anordnung zum Erstellen einer mechanischen Verbindung zwischen zwei Kabeltragvorrichtungselementen,
- **Fig. 2:**: einen schematisierten Längsschnitt durch eines der beiden Kabeltragvorrichtungselemente der Figur 1 mit vormontiertem Verbindungselement,
- **Fig. 3:**: eine Seitenansicht der Anordnung der Figur 1 beim Zusammensetzen der beiden Kabeltragvorrichtungselemente,
- **Fig. 4:**: eine Darstellung der beiden miteinander verbundenen Kabeltragvorrichtungselemente in einem Teillängsschnitt und
- **Fig. 5:**: eine schematisierte Seitenansicht zweier miteinander verbundener Kabelrinnen gemäß eines weiteren Ausführungsbeispiels.

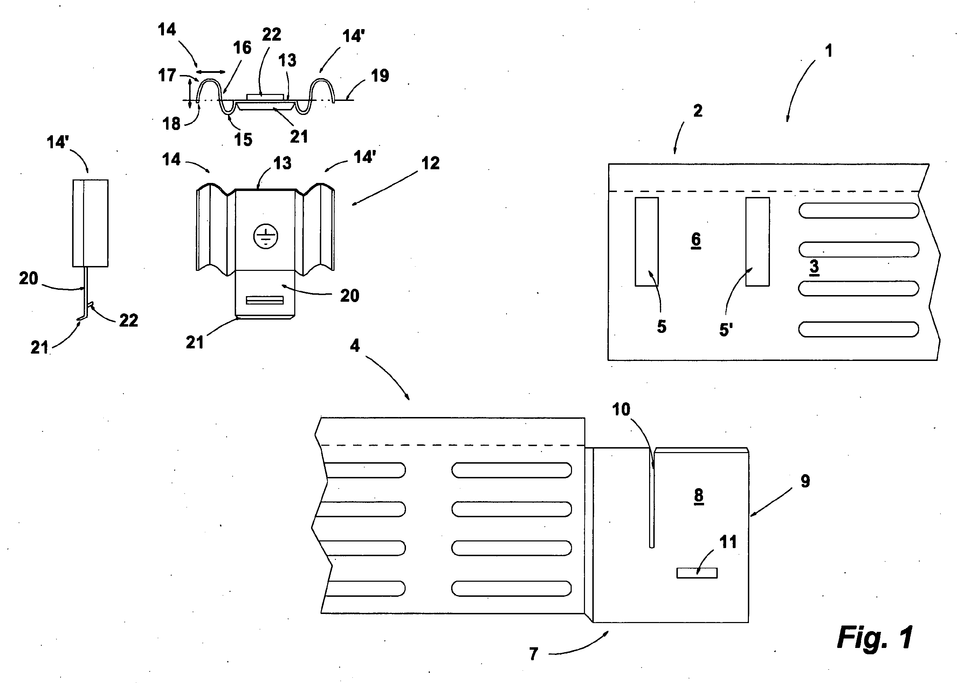

Eine Kabelrinne 1 als erstes Kabeltragvorrichtungselement umfasst an seinem in Figur 1 dargestellten linken Ende einen Verbindungsabschnitt 2. Figur 1 zeigt die Kabelrinne 1 in einer Seitenansicht und zeigt somit die eine Seitenwand 3 der Kabelrinne 1. Der Verbindungsabschnitt 2 bildet den Endabschnitt der Kabelrinne 1 und dient zum Verbinden der Kabelrinne 1 mit einer weiteren Kabelrinne 4 als zweites Kabeltragvorrichtungselement. In dem Verbindungsabschnitt 2 der Kabelrinne 1 sind zwei langlochartige Durchbrechungen 5, 5' vertikaler Erstreckung mit Abstand voneinander eingebracht. Die Durchbrechungen 5, 5' sind umfänglich geschlossen und fassen eine Kontaktfläche 6 seitlich ein, die durch den zwischen den beiden Durchbrechungen 5, 5' befindlichen Wandabschnitt 6 gebildet wird. Die beiden Kabelrinnen 1, 4 weisen zur Ausbildung eines Kabeltragsystems an ihren beiden Enden jeweils gleichartige Verbindungsabschnitte auf. Daher verfügt die Kabelrinne 1 an ihrem anderen, in den Figuren nicht dargestellten Ende über einen Verbindungsabschnitt, der nachfolgend anhand des Verbindungsabschnittes 7 der Kabelrinne 4 erläutert wird. Gleichermaßen verfügt die Kabelrinne 4 an ihrem in den Figuren nicht dargestellten Ende über einen Verbindungsabschnitt, der aufgebaut ist wie der Verbindungsabschnitt 2 der Kabelrinne 1. Der Verbindungsabschnitt 7 der Kabelrinne 4 ist durch eine die Querschnittsfläche der Kabelrinne vergrößernde Verkröpfung gebildet. Der Verbindungsabschnitt 7 ist somit als Muffe zur Aufnahme des Verbindungsabschnittes 2 der Kabelrinne 1 ausgebildet, so dass die beiden Verbindungsabschnitte 2, 7 zumindest bereichsweise überlappt angeordnet werden können. In dem Verbindungsabschnitt 7 befindet sich eine Steckerzunge 8, die einerseits durch den vorderen Rand 9 des Verbindungsabschnittes 7 und andererseits durch einen am oberen Rand des Verbindungsabschnittes 7 mündenden Einschnitt 10 gebildet wird. Die Rückseite der Steckerzunge 8 bildet die Kontaktfläche des Verbindungsabschnittes 7. Die Breite der Steckerzunge 8 entspricht etwa der Breite der Beabstandung der Durchbrechungen 5, 5' des Verbindungsabschnittes 2 der Kabelrinne 1. Die Steckerzunge 8 ist unterseitig durch eine Sperrriegelaufnahme 11 begrenzt. Die in dem Ausführungsbeispiel dargestellten Kabelrinnen 1, 4 sind aus einem verzinkten Blech hergestellt.

Zum Verbinden der beiden Kabelrinnen 1, 4 werden Verbindungselemente 12 verwendet, welche daher neben den Verbindungsabschnitten 2, 7 der Kabelrinnen 1, 4 Teil der Anordnung zum Erstellen der gewünschten mechanischen Verbindung zwischen den beiden Kabelrinnen 1, 4 sind. Die Zahl der eingesetzten Verbindungselemente ist abhängig von der Zahl der Kontaktflächen, die ein Verbindungsabschnitt 2, 7 trägt. Ein solches Verbindungselement 12 ist in Figur 1 (links) in einer Draufsicht, einer Seitenansicht und einer leicht schräg gestellten perspektivischen Ansicht gezeigt. Das Verbindungselement 12 ist durch Umformen eines Federstahlblechstückes hergestellt. Das Verbindungselement 12 verfügt über einen Andruckabschnitt 13, mit dem das Verbindungselement 12 an der Außenseite der Steckerzunge 8 der Kabelrinne 4 anliegt. An den Andruckabschnitt 13 angeformt ist zu jeder Seite gegenüberliegend jeweils ein Verriegelungsarm 14, 14'. Die Verriegelungsarme 14, 14' sind spiegelsymmetrisch zueinander aufgebaut. Im Folgenden ist der Verriegelungsarm 14 beschrieben. Gleiches gilt für den Verriegelungsarm 14'. Der Verriegelungsarm 14 ist S-förmig ausgebildet und umfasst einen ersten Bogenabschnitt 15, der sich von dem Andruckabschnitt 13 nach außen hin erstreckt. An den Bogenabschnitt 15 schließt ein Verbindungsschenkel 16 an, der an seinem freien Ende ein Hakenelement 17 trägt. Das Hakenelement 17 ist bei dem dargestellten Ausführungsbeispiel ebenfalls als Bogenstück ausgestaltet, so dass der Verriegelungsarm 14 insgesamt die vorbeschriebene S-förmige Formgebung aufweist. Wie aus der Draufsicht des Verbindungselementes 12 der Figur 1 erkennbar, befindet sich das freie Ende 18 des Hakenelementes 17 hinter der Ebene der Rückseite des Andruckabschnitts 13. Diese virtuelle Ebene ist in dieser Figur mit dem Bezugszeichen 19 gekennzeichnet. Der Verriegelungsarm 14 ist aufgrund seiner Materialelastizität und seiner Konzeption in Richtung der Ebene 19 sowie in Querrichtung dazu federelastisch.

An das untere Ende des Andruckabschnittes 13 ist ein Verriegelungsfortsatz 20 angeformt. Der Verriegelungsfortsatz 20 trägt an seinem unteren Ende eine nach außen hin ausgestellte Anlaufschräge 21 sowie mit Abstand zur Anlaufschräge 21 in Richtung zum Andruckabschnitt 13 hin einen nach innen ausgestellten Sperrriegel 22. Der Sperrriegel 22 ist, wie aus der Seitenansicht des Verbindungselementes 12 erkennbar, nach oben zum Andruckabschnitt 13 hin geneigt, so dass seine Unterseite gleichsam eine Anlaufschräge darstellt.

Die Verriegelungsarme 14, 14' des Verbindungselementes 12 dienen zum Durchgreifen der Durchbrechungen 5, 5' dergestalt, dass sich die freien Enden 18 der Hakenelemente 17 an der Rückseite der Wand 3 des Verbindungsabschnittes 2 der Kabelrinne 1 abstützen. Gleichermaßen dient der Einschnitt 10 dem Zweck, dass durch diesen ein Abschnitt des Verriegelungsarms 14, nämlich der Verbindungsschenkel 16 hindurchgeführt wird. Die Sperrriegelaufnahme 11 dient zur Aufnahme des Sperrriegels 22.

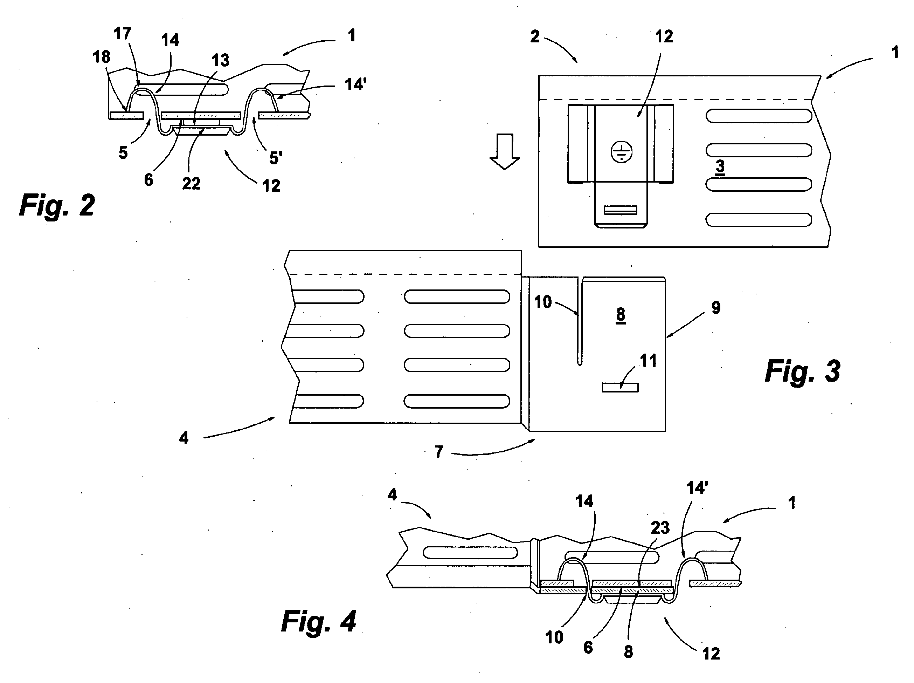

In der Praxis wird das Verbindungselement 12 bzw. werden die Verbindungselemente 12 vormontiert an der Kabelrinne 1 angeordnet sein, bevor die beiden Kabelrinnen 1, 4 miteinander verbunden werden. Der Teillängsschnitt der Figur 2 zeigt das an dem Verbindungsabschnitt 2 der Kabelrinne 1 vormontierte Verbindungselement 12. Das Verbindungselement 12 stützt sich mit den freien Enden 18 einer Verriegelungsarme 14, 14' an der Innenseite der Wand 3 des Verbindungsabschnittes 2 ab. An der Außenseite - der Kontaktfläche 6 - liegt der Sperrriegel 22 an. In einem in den Figuren nicht dargestellten Ausführungsbeispiel ist unterhalb der Kontaktfläche 6 des Verbindungsabschnittes 2 eine Ausnehmung entsprechend der Sperrriegelaufnahme 11 der Kabelrinne 4 zur Aufnahme des Sperrriegels 22 angeordnet. Bei einer solchen Ausgestaltung liegt das an der Kabelrinne vormontierte Verbindungselement 12 mit seinem Andruckabschnitt 13 flächig an der Kontaktfläche an.

Zum Verbinden der beiden Kabelrinnen 1, 4 wird die Kabelrinne 1 mit seinen beiden, an den gegenüberliegenden Wänden vormontierten Verbindungselementen 12 mit einer vertikalen Fügebewegung in den muffenartig ausgebildeten Verbindungsabschnitt 7 der Kabelrinne 4 eingesetzt (vgl. Figur 3). Bei diesem Vorgang wird die Steckerzunge 8 zwischen den Andruckabschnitt 13 des Verbindungselementes 12 und die Kontaktfläche 6 des Verbindungsabschnitts 2 der Kabelrinne 1 gebracht. Dieses ist infolge der unteren Anlaufschräge 21 des Verbindungselementes und der nach oben weisenden abgewinkelten Anordnung des Sperrriegels 22 ohne weiteres möglich. Infolge der materialelastischen Ausbildung der Verriegelungsarme 14, 14' springt der Sperrriegel 22 selbsttätig in die Sperrriegelaufnahme 11 des Verbindungsabschnittes 7 der Kabelrinne 4 ein, wenn die beiden Kabelrinnen 1, 4 bestimmungsgemäß zusammengesetzt worden sind. Die gewinkelte Anstellung des Sperrriegels 22 wirkt sodann als Widerhakenelement, wodurch eine Demontage der beiden Kabelrinnen 1, 4 nicht ohne weiteres möglich ist.

Die beiden miteinander verbundenen Kabelrinnen 1, 4 sind in Figur 4 dargestellt. Aus diesen Darstellungen wird deutlich, dass der Andruckabschnitt 13 des Verbindungselementes 12, nachdem der Sperrriegel 22 in die Sperrriegelaufnahme 11 eingesprungen ist, vollflächig auf die Außenseite der Steckerzunge 8 anliegt. Infolge der durch die Verriegelungsarme 14, 14' bereitgestellten Vorspannung, die auf den Andruckabschnitt 13 gleichermaßen übertragen werden, wird die Rückseite der Steckerzunge 8 - die Kontaktfläche 23 des Verbindungsabschnittes 7 - an die Kontaktfläche 6 des Verbindungsabschnittes 2 der Kabelrinne 1 gepresst. Folglich stehen beide Kontaktflächen 6, 23 unter einer durch die Vorspannung der Verriegelungsarme 14, 14' vordefinierten Andruckkraft. Die Fläche der miteinander in Kontakt befindlichen Kontaktflächen 6, 23 und die definierte Andruckkraft, mit der die beiden Kontaktflächen 6, 23 aneinander liegen, gestattet die Ausbildung einer definierten elektrischen Verbindung der beiden Kabelrinnen 1, 4, so dass diese Verbindung elektrischen Anforderungen genügen. Die mechanische Fixierung der beiden Kabelrinnen 3, 4 zueinander erfolgt durch die Dimensionierung der Verriegelungsarme 14, 14' und die Durchbrechungen 5, 5', wobei zweckmäßigerweise die Höhe der Durchbrechungen 5, 5' nur geringfügig größer bemessen ist als die Höhe der Verriegelungsarme 14, 14'. Die Längserstreckung des Sperrriegels 22 entspricht im wesentlichen der Längserstreckung der Sperrriegelaufnahme 11, so dass auf diese Weise durch das Verbindungselement 12 die beiden Kabelrinnen 1, 4 mit ihren jeweiligen Verbindungsabschnitten 2, 7 spielfrei bzw. quasi spielfrei miteinander verbunden sind.

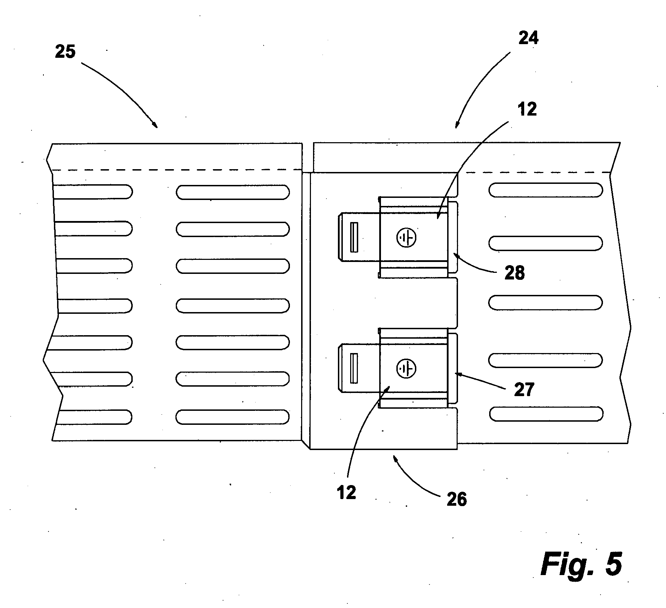

Figur 5 zeigt zwei miteinander verbundene Kabelrinnen 24, 25, die prinzipiell ebenso miteinander verbunden sind, wie dieses an dem zuvor beschriebenen Ausführungsbeispiel der Figuren 1 bis 4 erläutert worden ist. Im Unterschied zu dem Ausführungsbeispiel der Figuren 1 und 4, gemäß dem die beiden Kabelrinnen 1, 4 durch eine vertikale Fügebewegung miteinander verbunden werden, erfolgt ein Zusammenfügen der Kabelrinnen 24, 25 durch eine horizontale Fügebewegung. Aus diesem Grunde sind die an der Kabelrinne 24 vormontierten Verbindungselemente 12 um 90° gegenüber der Anordnung an der Kabelrinne 1 gedreht und mit ihrem Verriegelungsfortsatz 20 zu der Kabelrinne 25 weisend angeordnet. Aufgrund der Wandhöhe der Kabelrinnen 24, 25 sind bei dem dargestellten Ausführungsbeispiel zwei übereinander angeordnete Verbindungselemente 12 vorgesehen. Der muffenartig ausgebildete Verbindungsabschnitt 26 der Kabelrinne 25 weist zwei Steckerzungen 27, 28 auf, die beim Fügen der beiden Kabelrinnen 24, 25 unter den Andruckabschnitt der Verbindungselemente 12 eingeschoben worden sind und sodann mit ihrer Innenseite an der Außenseite des Verbindungsabschnittes der Kabelrinne 24 anliegen.

Aus der Beschreibung der Erfindung wird deutlich, dass durch die beschriebene Anordnung die beiden zu verbindenden Kabeltragvorrichtungselemente mit einfach zu erstellenden Elementen ausgestattet werden können, die zum Verbinden der beiden Kabeltragvorrichtungselemente unter Verwendung der vorbeschriebenen Verbindungselemente benötigt werden. Die Verbindung ist auf einfache Art und Weise und vor allem werkzeuglos möglich. Zweckmäßigerweise ist das bzw. sind die Verbindungselemente - wie beschrieben - bereits an einem Verbindungsabschnitt eines Kabeltragvorrichtungselementes vormontiert. Gleichwohl ist eine Montage der Verbindungselemente auch vor Ort bei der Ausbildung des Kabeltragsystems möglich. Insbesondere erfolgt eine gleichartige Verbindung zweier Kabeltragvorrichtungselemente unabhängig von ihrem Material oder auch ihrer Materialstärke. Für unterschiedliche Materialstärken können unterschiedlich dimensionierte Verbindungselemente vorgesehen sein. Die Verbindungselemente selbst weisen aufgrund der flächigen Ausbildung ihres Andruckabschnittes überdies eine geeignete Stelle zum Anbringen einer Kennzeichnung auf. Fehlmontagen werden vermieden, da die zwei Kabeltragvorrichtungselemente nur entsprechend einer einzigen Fügebewegung zusammengesetzt werden können.

In diesen Ausführungen ist ein Ausführungsbeispiel beschrieben. Gleichwohl erstreckt sich der beanspruchte Schutz auch auf zahlreiche andere Ausgestaltungen, die in diesen Unterlagen nicht explizit beschrieben sind.

### Bezugszeichenliste

- 1: Kabelrinne
- 2: Verbindungsabschnitt
- 3: Wand
- 4: Kabelrinne
- 5, 5': Durchbrechung
- 6: Kontaktfläche
- 7: Verbindungsabschnitt
- 8: Steckerzunge
- 9: Rand
- 10: Einschnitt
- 11: Sperrriegelaufnahme
- 12: Verbindungselement
- 13: Andruckabschnitt
- 14, 14': Verriegelungsarm
- 15: Bogenabschnitt
- 16: Verbindungsschenkel
- 17: Hakenelement
- 18: freies Ende
- 19: Ebene
- 20: Verriegelungsfortsatz
- 21: Anlaufschräge
- 22: Sperrriegel
- 23: Kontaktfläche

- 24: Kabelrinne
- 25: Kabelrinne
- 26: Verbindungsabschnitt
- 27: Steckerzunge
- 28: Steckerzunge

## Patentansprüche

1. Anordnung zum Erstellen einer Verbindung zwischen zwei im Bereich eines Verbindungsabschnittes (2, 7; 26) überlappend angeordneten Kabeltragvorrichtungselementen (1, 4; 24, 25) zur Ausbildung eines Kabeltragsystems unter Verwendung zumindest eines die beiden Kabeltragvorrichtungselemente (1, 4; 24, 25) zusammenhaltenden Verbindungselementes (12), wobei das Verbindungselement (12) einen Andruckabschnitt (13) und zwei an unterschiedlichen Seiten bezüglich des Andruckabschnittes (13) angeordnete Verriegelungsarme (14, 14') mit jeweils einen in einer Querrichtung zur Erstreckung des Andruckabschnittes (13) verlaufenden Verbindungsschenkel (16) und mit einem an dem freien Ende des Verbindungsschenkels (16) angeordneten Hakenelement (17) aufweist und sich das zum Zusammenhalten der beiden Kabeltragvorrichtungselemente (1, 4; 24, 25) montierte Verbindungselement (12) unter Federvorspannung stehend mit seinem Andruckabschnitt (13) auf der Oberfläche des Verbindungsabschnittes (7, 26) des einen Kabeltragvorrichtungselements (4, 25) und mit seinen den Verbindungsabschnitt des anderen Kabeltragvorrichtungselements (1, 14) hintergreifenden Hakenelementen (17) auf der gegenüberliegenden Oberfläche des Verbindungsabschnittes (2) des anderen Kabeltragvorrichtungselements (1, 24) abstützt, **dadurch gekennzeichnet,**
- **dass** jedes Kabeltragvorrichtungselement (1, 4; 24, 25) innerhalb seines oder seiner Verbindungsabschnitte (2, 7; 26) zumindest eine elektrische Kontaktfläche (6, 23) aufweist, an der bei verbundenen Kabeltragvorrichtungselementen (1, 4; 24, 25) eine elektrische Kontaktfläche (23, 6) des anderen Kabeltragvorrichtungselements (4, 1; 25, 24) zur Ausbildung einer definierten elektrischen Verbindung der beiden Kabeltragvorrichtungselemente (1, 4; 24, 25) anliegt und jede Kontaktfläche (6, 23) an zwei Seiten durch den jeweiligen, die Kontaktfläche (6, 23) tragenden Verbindungsabschnitt (2, 7; 26) durchgreifende Durchbrüche (5, 5') und/oder einen Rand (9) des Verbindungsabschnittes (7; 26) begrenzt ist,
- **dass** die Verriegelungsarme (14, 14') mit ihren Verbindungsschenkeln (16) zum Durchgreifen bzw. Einfassen des eine Kontaktfläche (6, 23) tragenden Verbindungsabschnittes (2, 7; 26) angeordnet sind und
- **dass** wenigstens einer der Verriegelungsarme (14, 14') zumindest abschnittsweise federelastische Materialeigenschaften aufweist, wodurch die aneinander liegenden Kontaktflächen (6, 23) mit definierter Andruckkraft aneinander liegen.

2. Anordnung nach Anspruch 1, **dadurch gekennzeichnet, dass** die Kabeltragvorrichtungselemente (1, 4; 24, 25) zwei komplementäre Verbindungsabschnitte (2, 7; 26) aufweisen, von denen bei einem Verbindungsabschnitt (2) die Kontaktflächen (6) jeweils durch zwei voneinander beabstandete Durchbrechungen (5, 5') gebildet sind, deren Höhe im wesentlichen der Höhe der Verbindungsschenkel (16) des Verbindungselements (12) entspricht und der Abstand der äußeren Begrenzungen der Durchbrechungen (5, 5') voneinander kleiner ist als der Abstand der Abschlüsse der Hakenelemente (17) des Verbindungselementes (12) voneinander, und von denen bei dem anderen Verbindungsabschnitt (7; 26) die Kontaktflächen durch zwei voneinander beabstandete randlich offene Durchbrüche und/oder einen randliche offenen Durchbruch (10) und einen Rand (9) des Verbindungsabschnittes (7, 26) zur Ausbildung eines Flachsteckerelementes (8; 27, 28) gebildet werden.

3. Anordnung nach Anspruch 2, **dadurch gekennzeichnet, dass** in den außen liegenden Verbindungsabschnitt (7) bei zwei verbundenen Kabeltragvorrichtungselementen (1, 4) eine Sperrriegelausnehmung (11) eingebracht ist.

4. Verbindungselement zum Erstellen insbesondere einer mechanischen Verbindung zwischen zwei im Bereich eines Verbindungsabschnittes (2, 7; 26) überlappend angeordneten Kabeltragvorrichtungselementen (1, 4; 24, 25) zur Ausbildung eines Kabeltragsystems, wobei das Verbindungselement (12) einen Andruckabschnitt (13) und zwei an unterschiedlichen Seiten bezüglich des Andruckabschnittes (13) angeordnete Verriegelungsarme (14, 14') mit jeweils einen in einer Querrichtung zur Erstreckung des Andruckabschnittes (13) verlaufenden Verbindungsschenkel (16) und mit einem an dem freien Ende des Verbindungsschenkels (16) angeordneten Hakenelement (17) aufweist, **dadurch gekennzeichnet, dass** die Verriegelungsarme (14, 14') mit ihren Verbindungsschenkeln (16) zum Durchgreifen bzw. Einfassen des eine elektrische Kontaktfläche (6) zur Ausbildung einer definierten elektrischen Verbindung tragenden Verbindungsabschnittes (2, 7; 27) mit der elektrischen Kontaktfläche (23) eines weiteren Verbindungsabschnittes eines weiteren Kabeltragvorrichtungselementes angeordnet sind und von welchen Verriegelungsarmen (14, 14') wenigstens einer zumindest abschnittsweise federelastische Materialeigenschaften aufweist, wodurch die aneinander liegenden Kontaktflächen (6, 23) mit definierter Andruckkraft aneinander liegen.

5. Gegenstand nach einem der Ansprüche 1 bis 4, **dadurch gekennzeichnet, dass** die Hakenelemente (17) in gegensinnige Richtungen weisend von dem jeweiligen Verbindungsschenkel (16) abragen.

6. Gegenstand nach Anspruch 5, **dadurch gekennzeichnet, dass** die Hakenelemente (17) von einander wegweisend an dem jeweiligen Verbindungsschenkel (16) angeordnet sind.

7. Gegenstand nach einem der Ansprüche 1 bis 6, **dadurch gekennzeichnet, dass** zumindest ein Verbindungsarm S-förmig, insbesondere beide Verbindungsarme (14, 14') S-förmig ausgebildet sind.

8. Gegenstand nach einem der Ansprüche 1 bis 7, **dadurch gekennzeichnet, dass** die Verriegelungsarme (14, 14') an gegenüberliegenden Seiten des Andruckabschnittes (13) angeordnet sind.

9. Gegenstand nach Anspruch 7, **dadurch gekennzeichnet, dass** das Verbindungselement (12) über einen zusätzlichen Verriegelungsfortsatz (20) mit einem nach innen ausgestellten Sperrriegel (22) verfügt.

10. Gegenstand nach Anspruch 9, **dadurch gekennzeichnet, dass** das freie Ende des Verriegelungsfortsatzes (20) zur Ausbildung einer Anlaufschräge (21) nach außen ausgestellt abgekantet ist.

11. Anordnung nach einem der Ansprüche 1 bis 3, **dadurch gekennzeichnet, dass** das Verbindungselement vormontiert an einem Kabeltragvorrichtungselement ist.

## Claims

1. Arrangement for establishing a connection between two cable support device elements (1, 4; 24, 25) which are arranged in an overlapping manner in the region of a connecting section (2, 7; 26) in order to produce a cable support system by using at least one connecting element (12) which holds together both of the cable support device elements (1, 4; 24, 25), the connecting element (12) having a contact section (13) and two locking arms (14, 14') arranged on different sides in relation to the contact section (13), each with a connecting limb (16) running transversely to the extension of the contact section (13) and with a hook element (17) arranged on the free end of the connecting limb (16), and the connecting element (12) fitted to hold together the two cable support device elements (1, 4; 24, 25) rests, under spring preloading with its contact section (13) on the surface of the connecting section (7, 26) of the one cable support device element (4, 25) and with its hook elements (17) gripping behind the connecting section of the other cable support device element (1, 14) on the opposite surface of the connecting section (2) of the other cable support device element (1, 24), **characterised in**
- **that** each cable support device element (1, 4; 24, 25) has at least one electrical contact surface (6, 23) within its connecting section or sections (2, 7; 26), on which, when the cable support device elements (1, 4; 24, 25) are connected, an electrical contact surface (6, 23) of the other cable support device element (4, 1; 25, 24) abuts to form a defined electrical connection of the two cable support device elements (1, 4; 24, 25) and each contact surface (6, 23) is delimited on two sides by the openings (5, 5') which penetrate the respective connecting section (2, 7; 26) which supports the contact surface (6, 23), and/or an edge (9) of the connecting section (7; 26),
- **that** the locking arms (14, 14') with their connecting limbs (16) are arranged so as to penetrate and/or frame the connecting section (2, 7; 26) supporting one contact surface (6, 23) and
- **that** at least one of the locking arms (14, 14') has, at least in some sections, spring-elastic material properties, as the result of which the abutting contact surfaces (6, 23) abut each other with a defined pressure.

2. Arrangement according to claim 1, **characterised in that** the cable support device elements (1, 4; 24, 25) have two complementary connecting sections (2, 7; 26), of which, in one connecting section (2), the contact surfaces (6) are formed in each case by two openings (5, 5') at a distance from each other, whose height corresponds essentially to the height of the connecting limbs (16) of the connecting element (12) and the distance of the outer limits of the openings (5, 5') from each other is less than the distance of the ends of the hook elements (17) of the connecting element (12) from each other, and of which, in the other connecting section (7, 26), the contact surfaces are formed by two breakthroughs at a distance from each other with open edges and/or one breakthrough (10) with open edges and one edge (9) of the connecting section (7, 26) to form a flat plug element (8; 27, 28).

3. Arrangement according to claim 2, **characterised in that** a locking bolt recess (11) is inserted in the external connecting section (7), when two cable support device elements (1, 4) are connected.

4. Connecting element for the establishment in particular of a mechanical connection between two cable support device elements (1, 4; 24, 25) arranged in an overlapping manner in the area of a connecting section (2, 7; 26) to form a cable support system, while the connecting element (12) has a contact section (13) and two locking arms (14, 14') arranged on different sides in relation to the contact section (13), each with a connecting limb (16) running transversely to the extension of the contact section (13) and with a hook element (17) arranged on the free end of the connecting limb (16), **characterised in that** the locking arms (14, 14') are arranged with their connecting limbs (16) to penetrate and/or frame the one connecting section (2, 7; 27) supporting an electrical contact surface (6) to form a defined electrical connection with the electrical contact surface (23) of a further connecting section of a further cable support device element and of which locking arms (14, 14') at least one, at least in some sections, has spring-elastic material properties, as the result of which the abutting contact surfaces (6, 23) abut each other with a defined pressure.

5. Subject matter according to one of claims 1 to 4, **characterised in that** the hook elements (17) protrude downwards in opposite directions from the respective connecting limb (16).

6. Subject matter according to claim 5, **characterised in that** the hook elements (17) are arranged on the respective connecting limb (16) pointing away from each other.

7. Subject matter according to one of claims 1 to 6, **characterised in that** at least one connecting arm is S-shaped, in particular both connecting arms (14, 14') are S-shaped.

8. Subject matter according to one of claims 1 to 7, **characterised in that** the locking arms (14, 14') are arranged on opposite sides of the contact section (13).

9. Subject matter according to claim 7, **characterised in that** the connecting element (12) has an additional locking extension (20) with an inwardly-oriented locking bolt (22).

10. Subject matter according to claim 9, **characterised in that** the free end of the locking extension (20) is oriented outwards and angled down to form a chamfered edge (21).

11. Arrangement according to one of claims 1 to 3, **characterised in that** the connecting element is premounted on a cable support device element.

## Revendications

1. Disposition pour établir une liaison entre deux éléments (1, 4 ; 24, 25) de dispositif de suspension de câble disposés de façon à se chevaucher au niveau d'un tronçon de liaison (2, 7 ; 26) pour former un système de suspension de câble en utilisant au moins un élément de liaison (12) maintenant ensemble les deux éléments (1, 4 ; 24, 25) de dispositif de suspension de câble, l'élément de liaison (12) présentant un tronçon d'appui (13) et deux bras de verrouillage (14, 14') disposés sur deux côtés différents par rapport au tronçon d'appui (13), munis chacun d'une jambe de liaison (16) qui s'étend transversalement à l'étendue longitudinale du tronçon d'appui (13) et munis d'un élément en crochet (17) disposé sur l'extrémité libre de la jambe de liaison (16) et l'élément de liaison (12) monté pour maintenir ensemble les deux éléments (1, 4 ; 24, 25) de dispositif de suspension de câble, s'appuyant avec son tronçon d'appui (13), tout en restant sous une précontrainte de ressort, sur la surface du tronçon de liaison (7, 26) de l'un des éléments (4, 25) de dispositif de suspension de câble et s'appuyant de son élément en crochet (17) qui saisit par l'arrière le tronçon de liaison de l'autre élément (1, 14) de dispositif de suspension de câble, sur la surface opposée du tronçon de liaison (2) de l'autre élément (1, 24) de dispositif de suspension de câble **caractérisé en ce que**
- chaque élément (1, 4 ; 24, 25) de dispositif de suspension de câble présente sur son ou ses tronçons de liaison (2, 7 ; 26) au moins une surface de contact (6, 23) électrique contre laquelle s'appuie, lorsque les éléments (1, 4 ; 24, 25) de dispositif de suspension de câble sont reliés, une surface de contact (23, 6) électrique de l'autre élément (4, 1 ; 25, 24) de dispositif de suspension de câble afin de réaliser une liaison électrique définie des deux éléments (1, 4 ; 24, 25) de dispositif de suspension de câble et que chaque surface de contact (6, 23) est limitée sur deux côtés par des percées (5, 5,') traversant le tronçon de liaison (2, 7 ; 26) concerné qui supporte la surface de contact (6, 23) et/ou par un bord (9) du tronçon de liaison (7 ; 26),
- les bras de verrouillage (14, 14') avec leurs jambes de verrouillage (16) sont disposés afin de traverser ou sertir le tronçon de liaison (2, 7 ; 26) supportant une surface de contact (6, 23) et
- qu'au moins un des bras de verrouillage (14, 14') présente du moins sur un tronçon des propriétés élastiques de son matériau, grâce auxquelles les surfaces de contact (6, 23) en appui l'une contre l'autre reste en appui l'une contre l'autre selon une force d'appui définie.

2. Disposition selon la revendication 1 **caractérisée en ce que** les éléments (1, 4 ; 24, 25) de dispositif de suspension de câble présentent deux tronçons de liaison (2, 7 ; 26) complémentaires pour lesquels les surfaces de contact (6) sont constituées pour l'un des tronçons de liaison (2) de deux percées (5, 5') à distance l'une de l'autre, dont la hauteur correspond pour l'essentiel à la hauteur des jambes de liaison (16) de l'élément de liaison (12) et dont l'intervalle entre les limitations externes des percées (5, 5') est plus petit que l'intervalle entre les extrémités des éléments en crochet (17) de l'élément de liaison (12) et pour lesquels les surfaces de contact sont constituées pour l'autre tronçon de liaison (7 ; 26) de deux percées ouvertes au niveau du bord à distance l'une de l'autre et/ou une percée ouverte (10) au niveau du bord et un bord (9) du tronçon de liaison (7, 26) afin de former un élément à fiche plate (8 ; 27, 28).

3. Disposition selon la revendication 2 **caractérisée en ce que** dans le tronçon de liaison (7) situé vers l'extérieur est intégré un évidement à verrou de sûreté (11) dans deux éléments (1, 4) reliés de dispositif de suspension de câble.

4. Élément de liaison destiné notamment à réaliser une liaison mécanique entre deux éléments (1, 4 ; 24, 25) de dispositif de suspension de câble disposés de façon à se chevaucher au niveau d'un tronçon de liaison (2, 7 ; 26) afin de former un système de suspension de câble, l'élément de liaison (12) présentant un tronçon d'appui (13) et deux bras de verrouillage (14, 14') disposés sur deux côtés différents par rapport au tronçon d'appui (13), munis chacun d'une jambe de liaison (16) qui s'étend transversalement à l'étendue longitudinale du tronçon d'appui (13) et munis d'un élément en crochet (17) disposé sur l'extrémité libre de la jambe de liaison (16) **caractérisé en ce que** les bras de verrouillage (14, 14') avec leurs jambes de liaison (12) sont disposés pour traverser ou sertir le tronçon de liaison (2, 7 ; 27) supportant une surface de contact (6) électrique destinée à réaliser une liaison électrique définie à l'aide de la surface de contact (23) électrique d'un autre tronçon de liaison d'un autre élément de dispositif de suspension de câble et dont les bras de verrouillage (14, 14') présentent au moins, et sur un tronçon du moins, des propriétés élastiques du matériau au moyen desquelles les surfaces de contact (6, 23) en contact l'une avec l'autre sont en appui l'une contre l'autre selon une force d'appui définie.

5. Objet selon l'une des revendications 1 à 4 **caractérisé en ce que** les éléments en crochet (17) sont en saillie de ladite jambe de liaison (16) et orientés dans des sens opposés.

6. Objet selon la revendication 5 **caractérisé en ce que** les éléments en crochet (17) sont disposés selon une orientation opposée sur ladite jambe de liaison (16).

7. Objet selon l'une des revendications 1 à 6 **caractérisé en ce qu'**au moins un bras de liaison est conformé en S et que notamment les deux bras de liaison (14, 14') sont conformés en S.

8. Objet selon l'une des revendications 1 à 7 **caractérisé en ce que** les bras de verrouillage (14, 14') sont disposés sur deux côtés opposés du tronçon d'appui (13).

9. Objet selon la revendication 7 **caractérisé en ce que** l'élément de liaison (12) dispose d'un prolongement de verrouillage supplémentaire (20) avec un verrou de sûreté (22) orienté vers l'intérieur.

10. Objet selon la revendication 9 **caractérisé en ce que** l'extrémité libre du prolongement de verrouillage (20) est repliée en saillie vers l'extérieur afin de former un biseau d'attaque (21).

11. Disposition selon l'une des revendications 1 à 3 **caractérisé en ce que** l'élément de liaison est préalablement monté sur un élément de dispositif de suspension de câble.
